# EUROPÄISCHE PATENTANMELDUNG

(11) **EP 2 030 500 A1**
(43) Veröffentlichungstag der Anmeldung: **04.03.2009**
(21) Anmeldenummer: 08015349.7
(22) Anmeldetag: 29.08.2008
(51) Int. Cl.: A01D 90/00, A01D 90/04

(54) **Lade-, Kombi-, Transport- oder Häckselwagen zum Transportieren von Erntegut und Verfahren zu seiner Beladung**

(30) Priorität: 30.08.2007 DE 102007041138
(71) Anmelder: S-A-S Spezielle-Agrar-Systeme GmbH, 34466 Wolfhagen-Niederelsungen (DE)
(72) Erfinder: Linsel, Tobias, 34359 Reinhardshagen (DE); Schmerse, Stefan, 34125 Kassel (DE); Pflüger, Lars, 34466 Wolfhagen (DE)
(74) Vertreter: Walther, Walther & Hinz GbR

(57) **Zusammenfassung**

Gegenstand der Erfindung ist ein Ladewagen, Kombiwagen oder dergleichen, zum Transportieren von Erntegut (12), mit einem auf einem Chassis gehaltenen Laderaum (18), an dessen vorderer, unterer Ecke ein Förder- und/oder Schneidwerk (16) angeordnet ist. Einen Wagen und ein Verfahren zu seiner Beladung mit Erntegurt der eingangs genannten Art zu schaffen, so dass der Wagen vielseitiger verwendbar ist und/oder eine höhere Ladekapazität erreicht wird dadurch erreicht, dass an einer Oberseite des Förder- und/oder Schneidwerkes (16) eine Klappvorrichtung (10) vorgesehen ist, die im zugeklappten Zustand als obere Abdeckung des Förder- und/oder Schneidwerkes (16) fungiert und die im geöffneten Zustand als Fangtrichter fungiert.

## Beschreibung

Die vorliegende Erfindung betrifft je einen Wagen gemäß dem Oberbegriff der Ansprüche 1 oder 2, sowie ein Verfahren gemäß dem Oberbegriff des Anspruches 5.

Bei der Ernte von landwirtschaftlichen Erzeugnissen werden verschiedene Maschinen eingesetzt, um das Erntegut zu ernten. Nach der eigentlichen Ernte muss das Erntegut dann vom Feld in eine Lagerstätte transportiert werden. Hierzu werden Transportwagen eingesetzt, die in der Regel an ein Zugfahrzeug angehängt werden und einen entsprechend großen Laderaum aufweisen. Diese Transportwagen werden üblicherweise von oben befüllt, wobei eine neben dem Transportwagen herfahrende Erntemaschine, z. B. ein Mähdrescher oder ein Häcksler, das Erntegut über ein oberhalb des Transportwagens geführtes Druckrohr in den Laderaum des Transportwagens einbläst.

Darüber hinaus gibt es Lade- oder Kombiwagen zum Transportieren von Erntegut, die an ihrer vorderen, unteren Ecke eine Pick-up Vorrichtung zum Aufnehmen des Erntegutes und ein Förder- und/oder Schneidwerk aufweisen, um das von der Pick-up aufgenommene Erntegut in den Laderaum zu transportieren. Das Erntegut wird mit dem Förder- und/oder Schneidwerk gleich geschnitten und/oder verdichtet. Ein solcher Ladewagen ist beispielsweise aus der DE 10 2006 014 126 A1 bekannt.

Um die Ladekapazität des Lade- oder Häckselwagens zu erhöhen, ist aus der DE 199 41 083 A1 eine Vorrichtung zum Verdichten des Erntegutes bekannt, die auf die Oberkante des Ladewagens aufgesetzt ist. Diese Vorrichtung ist mit einem Fangtrichter versehen, um das aus dem Druckrohr geblasene Erntegut zuverlässig aufzunehmen und der Verdichtungseinheit zuzuführen. Eine solche Vorrichtung zum Verdichten ist aber vergleichsweise teuer und erhöht das Leergewicht des Wagens aber so, dass das Nutzgewicht entsprechend reduziert ist.

Aus der DE-AS 20 63 439 ist eine Vorrichtung zum Bergen und Silieren von Futter bekannt (Fig. 10), der über einen Trichter Häckselgut zugeführt wird, welches über Presswerkzeuge in eine Plastikfolie gepresst wird, wobei ein derartiger Ballen anschließend auf dem Feld abgelegt wird, um später eingesammelt und abtransportiert zu werden. Ein solches zweistufiges Ernten und Abtransportieren ist sehr zeitaufwendig.

Bei landwirtschaftlichen Betrieben ist es heutzutage üblich, dass auf verschiedenen Feldern verschiedene Pflanzen angebaut werden. Dies hat zur Folge, dass ein landwirtschaftlicher Betrieb sowohl einen Lade- oder Häckselwagen, als auch ein Kombiwagen benötigt, was hohe Anschaffungs-, Wartungs- und Lagerkosten zur Folge hat.

Davon ausgehend liegt der vorliegenden Erfindung die Aufgabe zu Grunde, einen Wagen und ein Verfahren zu seiner Beladung mit Erntegut der eingangs genannten Art zu schaffen, der wirtschaftlicher genutzt werden kann, insbesondere weil er vielseitiger verwendbar ist und/oder eine höhere Ladekapazität erreicht.

Als technische Lösung dieser Aufgabe wird erfindungsgemäß ein Wagen mit den Merkmalen eines der Ansprüche 1 oder 2 und ein Verfahren zu seiner Beladung mit den Merkmalen des Anspruches 5 vorgeschlagen. Vorteilhafte Weiterbildungen dieser Wagen und dieses Verfahrens sind den jeweiligen Unteransprüchen zu entnehmen.

Ein nach dieser technischen Lehre ausgebildeter Wagen und ein nach dieser technischen Lehre ausgeführtes Verfahren haben den Vorteil, dass die Anbringung einer Klappvorrichtung an der Oberseite des Förder- und/oder Schneidwerkes, bzw. dass die Anbringung einer Klappvorrichtung und eines Förder- und/oder Schneidwerkes an einer vorderen, unteren Ecke des Transportwagens das Einsatzspektrum des jeweiligen Wagens deutlich erhöht wird.

So kann der Lade- oder Kombiwagen z. B. mit seiner Pick-up Einrichtung eingesetzt werden, um z. B. Heu aufzunehmen und zu verdichten. Bei einem solchen Einsatz ist die erfindungsgemäße Klappvorrichtung geschlossen. Öffnet man die erfindungsgemäße Klappvorrichtung so entsteht ein Fangtrichter und der Lade- oder Kombiwagen kann das vom Häcksler gehäckselte Erntegut aufnehmen, wobei das gehäckselte Erntegut nunmehr über ein Druckrohr von oben in die geöffnete Klappvorrichtung geblasen wird, so dass das Förder- und/oder Schneidwerk das gehäckselte Erntegut erfassen und beim Fördern in den Laderaum verdichten kann.

Die Befüllung des Transportwagens über die als Fangtrichter fungierende Klappvorrichtung erfolgt durch zum Beispiel eine zusätzliche Erntmaschine, manuell von Hand, einem Förderband oder einem Radlader. Dies kann sowohl während der Fahrt, zum Beispiel auf dem Feld oder im Stand, zum Beispiel auf dem Hof erfolgen. Dabei ist die Aufnahme verschiedener Güter wie zum Beispiel Heu, Stroh, Gras, Ganzpflanzensilage, Getreide, Grünschnitt, Schwachholz, Recyclingmaterial wie zum Beispiel Kunststoff oder Papier oder pflanzliche Reststoffe aus Biogasanlagen möglich. Mit der erfindungsgemäßen Klappvorrichtung können diese Landwirtschaftlichen Maschinen auch in anderen Bereichen, zum Beispiel in der Recyclingwirtschaft eingesetzt werden.

Ähnliche Vorteile ergeben sich auch bei einer Ballenpresse, da das zu pressende z.B. Heu mit dem erfindungsgemäßen Wagen wahlweise über die Pick-up Vorrichtung oder die geöffnete Klappvorrichtung dem Förder-und/oder Schneidwerk zugeführt werden kann.

Ein weiterer Vorteil ergibt sich bei einem einfachen Transportwagen daraus, dass durch die Anbringung eines Förder- und/oder Schneidwerkes mit der erfindungsgemäßen Klappvorrichtung das Erntegut dann verdichtet in den Laderaum gelangt, was die Kapazität des Transportwagens erhöht.

In einer bevorzugten Ausführungsform umfasst die Klappvorrichtung eine Vorderwand und eine rechte und linke Seitenwand, die an einem vorzugsweise auf dem Förder- und/oder Schneidwerk angebrachten Unterbau gehalten sind. Dabei hat es sich als vorteilhaft erwiesen, die Seitenwände klappbar am Unterbau anzubringen, so dass diese nach innen eingeklappt und auf den Unterbau aufgelegt werden können. Auch die Vorderwand ist vorteilhafterweise schwenkbar am Unterbau gehalten, so dass die Vorderwand, z. B. von einer aufrechten Position in eine liegende Position umgeklappt werden kann und dabei auf den Seitenwänden aufliegt. In dieser liegenden Position fungiert die Klappvorrichtung als Abdichtung oder Deckel des Förder- und/oder Schneidwerkes. In seiner aufgeklappten Stellung fungiert die Klappvorrichtung als Fangtrichter für das Erntegut.

Durch die Klappvorrichtung kann auch das Verfahren zum Beladen des Wagens deutlich vereinfacht werden, da das Beladen und Verdichten in quasi einem Arbeitsschritt erfolgt, so dass das Erntegut bereits verdichtet in den Laderaum gelangt. Dies erhöht nicht nur die Ladekapazität des Wagens, sondern reduziert auch den Bedarf an Lagerraum in der endgültigen Lagerstätte.

In einer alternativen Ausführungsform ist der Fangtrichter starr und nicht klappbar ausgeführt, falls die baulichen Gegebenheiten des Wagens dies zulassen.

Weitere Vorteile der erfindungsgemäßen Wagen und des erfindungsgemäßen Verfahrens ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine schematische Darstellung eines erfindungsgemäßen Ladewagens zu einem ersten Zeitpunkt während des Beladens;
- Fig. 2: den Ladewagen gemäß Fig. 1 zu einem zweiten Zeitpunkt während des Beladens;
- Fig. 3: den Ladewagen gemäß Fig. 1 zu einem dritten Zeitpunkt während des Beladens;
- Fig. 4a: eine schematisch dargestellte, perspektivische Ansicht des Ladewagens gemäß Fig. 1 mit als Fangtrichter ausgestellter Klappvorrichtung;
- Fig. 4b: eine schematisch dargestellte Draufsicht auf den Ladewagen gemäß Fig. 4a;
- Fig. 4c: eine schematisch dargestellte Frontansicht des Ladewagens gemäß Fig. 4a;
- Fig. 5a: eine schematisch dargestellte, perspektivische Ansicht des Ladewagens gemäß Fig. 4a, mit eingeklappten Seiten- wänden;
- Fig. 5b: eine schematisch dargestellte Draufsicht auf den Ladewagen gemäß Fig. 5a;
- Fig. 6a: eine schematisch dargestellte, perspektivische Ansicht des Ladewagens gemäß Fig. 4a, mit geschlossener Klapp- vorrichung;
- Fig. 6b: eine schematisch dargestellte Draufsicht auf den Ladewagen gemäß Fig. 6a.

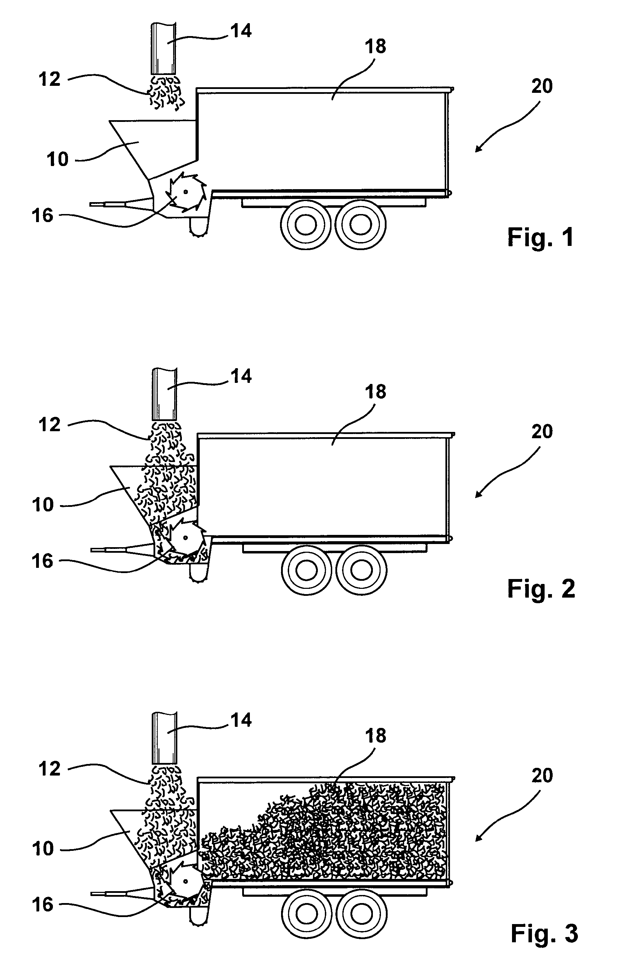

In den Figuren 1 bis 3 ist das Verfahren zum Beladen des Wagens mit der erfindungsgemäßen Klappvorrichtung schematisch dargestellt. Dabei fungiert die geöffnete Klappvorrichtung 10 als Fangtrichter für das Erntegut 12. Wie in Fig. 1 zu entnehmen ist, wird das Erntegut 12 über ein Druckrohr 14 in die Klappvorrichtung 10 geblasen und von der Klappvorrichtung 10 zum Förder- und/oder Schneidwerk 16 geführt. Dieses Förder- und/oder Schneidwerk 16 verdichtet das Erntegut 12 und transportiert es in einen Laderaum 18 des Wagens 20.

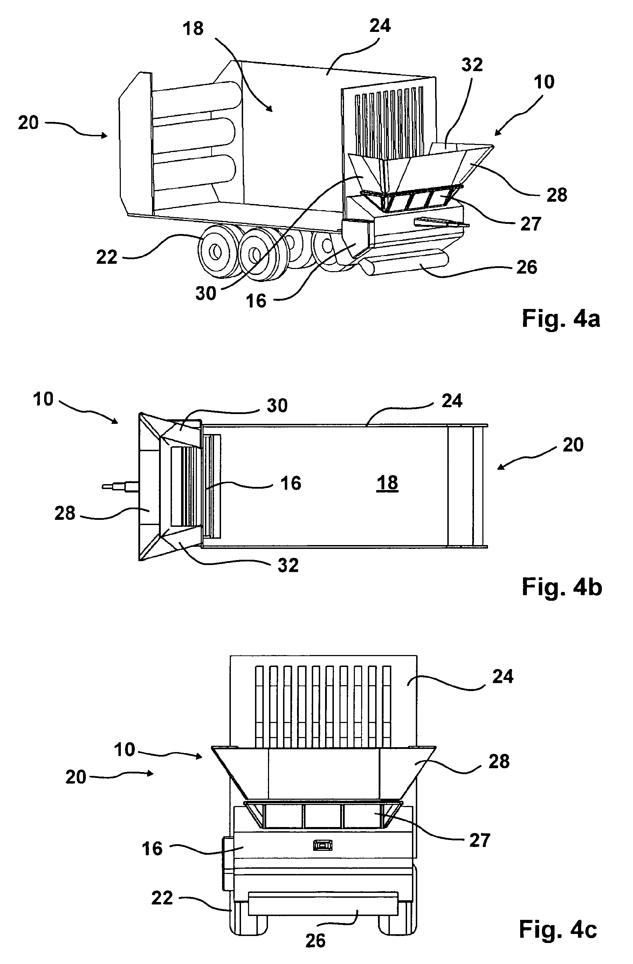

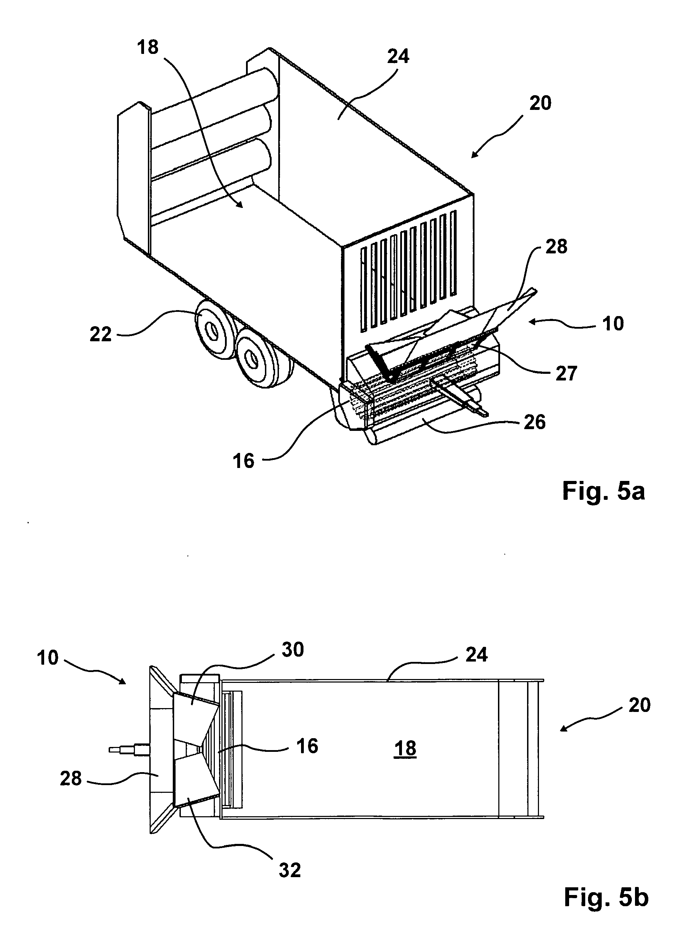

In den Fig. 4a bis 6b wird dieser Wagen 20 etwas detaillierter und in verschiedenen Blickwinkeln dargestellt. Dieser Wagen 20 umfasst ein Chassis 22, auf dem ein großvolumiger Aufbau 24 angeordnet ist. In diesem Aufbau 24 ist der Laderaum 18 ausgebildet. An der vorderen unteren Ecke des Laderaums 18 ist ein Förder- und/oder Schneidwerk 16 angeordnet, an dessen Unterseite eine Pick-up Vorrichtung 26 angebracht ist. An der Oberseite des Förder- und/oder Schneidwerkes 16 ist die Klappvorrichtung 10, umfassend einen Unterbau 27, eine Vorderwand 28, eine rechte Seitenwand 30 und eine linke Seitenwand 32, angeordnet. Wie insbesondere den Figuren 5a und 5b zu entnehmen ist, sind die rechte 30 und linke Seitenwand 32 schwenkbar am Unterbau 27 gehalten und können von einer geöffneten Position gemäß Fig. 4a bis 4c in eine eingeklappte Position gemäß Fig. 5a und 5b überführt werden. Dabei liegen die rechte 30 und linke Seitenwand 32 auf dem Unterbau 27 auf.

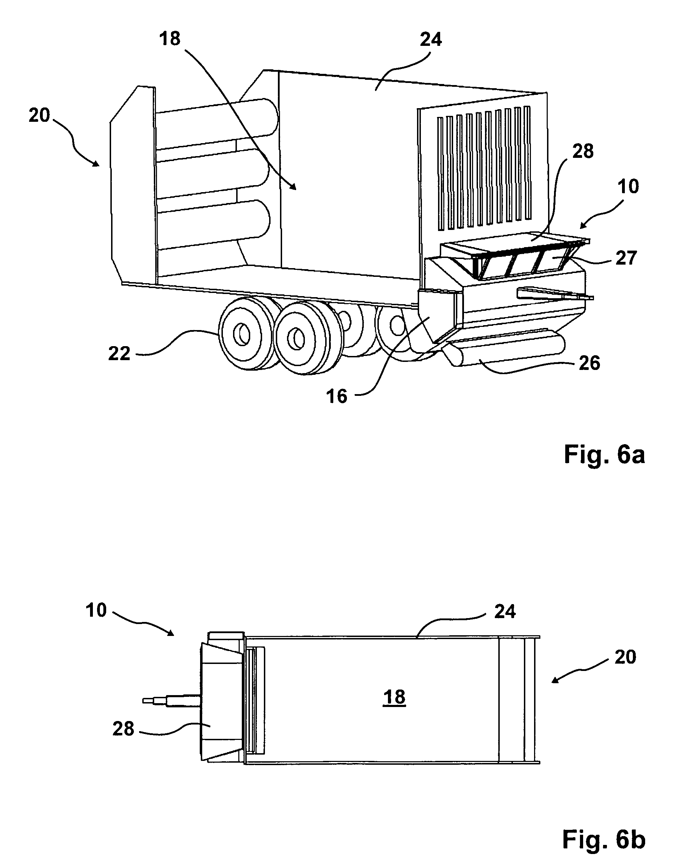

Auch die Vorderwand 28 ist schwenkbar am Unterbau 27 und kann von ihrer geöffneten Position gemäß den Fig. 4a bis 5b in eine geschlossene Position gemäß Fig. 6a bis 6b überführt werden, indem die Vorderwand 28 in Richtung des Laderaums 18 umgeklappt wird. Dabei kommt die Vorderwand 28 auf dem Unterbau, respektive auf den bereits umgeklappten Seitenwänden 30, 32, zur Anlage und fungiert somit als Deckel für das Förder- und/oder Schneidwerk 16.

In einer anderen, hier nicht dargestellten Ausführungsform kann der Wagen auch nur mit einem Förder- und/oder Schneidwerk und der entsprechenden Klappvorrichtung ausgestattet werden. In diesem Falle hat der Wagen dann eben keine Pick-up Vorrichtung. Durch eine solche Klappvorrichtung in Verbindung mit dem Förder- und/oder Schneidwerk kann die Ladekapazität des Wagens erhöht werden, da das Erntegut verdichtet in den Laderaum gelangt.

In einer anderen, hier nicht dargestellten Ausführungsform kann die erfindungsgemäße Klappvorrichtung auch an einer Ballenpresse mit Pick up Vorrichtung und einem Förder- und/oder Schneidwerkes vorgesehen werden.

### Bezugszeichenliste:

- 10,: Klappvorrichtung
- 12: Erntegut
- 14: Druckrohr
- 16: Förder- und/oder Schneidwerk
- 18: Laderaum
- 20,: Wagen
- 22: Chassis
- 24: Aufbau
- 26,: Pick-up Vorrichtung
- 27,: Unterbau
- 28,: Vorderwand
- 30,: rechte Seitenwand
- 32,: linke Seitenwand

## Patentansprüche

1. Lade- oder Kombiwagen zum Aufnehmen und Transportieren von Erntegut, mit einem auf einem Chassis (22) gehaltenen Laderaum (18), an dessen vorderer, unterer Ecke eine Pick-up Vorrichtung (26) zum Aufnehmen des Erntegutes und ein Förder- und/oder Schneidwerk (16) angeordnet sind,
**dadurch gekennzeichnet,**
**dass** an einer Oberseite des Förder- und/oder Schneidwerkes (16) eine Klappvorrichtung (10) vorgesehen ist, die im zugeklappten Zustand als obere Abdeckung des Förder- und/oder Schneidwerkes (16) fungiert und die im geöffneten Zustand als Fangtrichter fungiert.

2. Transport- oder Häckselwagen zum Transportieren von Erntegut, mit einem auf einem Chassis gehaltenen Laderaum,
**dadurch gekennzeichnet,**
**dass** an einer vorderen oder hinteren, unteren Ecke des Laderaumes ein Förder- und/oder Schneidwerk angeordnet ist, und dass an einer Oberseite des Förder- und/oder Schneidwerkes eine Klappvorrichtung vorgesehen ist, die im zugeklappten Zustand als obere Abdeckung des Förder- und/oder Schneidwerkes fungiert und die im geöffneten Zustand als Fangtrichter fungiert.

3. Wagen nach einem der vorangehenden Ansprüche,
**dadurch gekennzeichnet,**
**dass** die Klappvorrichtung (10) einen am Förder- und/oder Schneidwerk (16) angebrachten Unterbau (27) aufweist, an dem eine Vorderwand (28), eine rechte (30) und eine linke Seitenwand (32) klappbar gehalten sind.

4. Wagen nach Anspruch 3,
**dadurch gekennzeichnet,**
**dass** die Seitenwände (30, 32) auf den Unterbau (27) klappbar sind und dass die Vorderwand (28) auf die liegenden Seitenwände (30, 32) klappbar ist.

5. Verfahren zum Beladen eines Lade-, Kombi-, Transport- oder Häckselwagens zum Transportieren von Erntegut auf dem Feld, wobei der Wagen auf dem Feld neben oder hinter einer Erntemaschine geführt wird und wobei die Erntemaschine das Erntegut in den Wagen (20) befördert,
**dadurch gekennzeichnet,**
**dass** die Erntemaschine das Erntegut in ein am Wagen (20) vorhandenes Förder- und/oder Schneidwerk (16) leitet und dass das Erntegut von diesem verdichtet wird, bevor das Erntegut in den Laderaum gelangt.

6. Verfahren nach Anspruch 5,
**dadurch gekennzeichnet,**
**dass** das Erntegut von oben in das Förder- und/oder Schneidwerk (16) gelangt.

7. Verfahren nach einem der Ansprüche 4 oder 5,
**dadurch gekennzeichnet,**
**dass** die Erntemaschine das Erntegut zunächst in eine als Fangtrichter fungierende Klappvorrichtung (10) an dem Förder- und/oder Schneidwerk (16) leitet, von wo aus das Erntegut in das Förder-und/oder Schneidwerk (16) gelangt.
